# EUROPEAN PATENT APPLICATION

(11) **EP 4 521 482 A1**
(43) Date of publication of application: **12.03.2025**
(21) Application number: 24808833.8
(22) Date of filing: 13.06.2024
(51) Int. Cl.: H01M 4/13, H01M 4/36, H01M 4/62, H01M 4/139

(54) **ELECTRODE MIXTURE SHEET, ELECTRODE, SECONDARY BATTERY, AND METHOD FOR PRODUCING ELECTRODE MIXTURE SHEET**

(30) Priority: 13.06.2023 JP 2023097002
(71) Applicant: Daikin Industries, Ltd., Osaka-shi, Osaka 530-0001 (JP)
(72) Inventor: KIKUCHI, Nozomi, Osaka-shi, Osaka 530-0001 (JP); YAMADA, Takaya, Osaka-shi, Osaka 530-0001 (JP); ISHINO, Yuta, Osaka-shi, Osaka 530-0001 (JP); TOKUDA, Masato, Osaka-shi, Osaka 530-0001 (JP)
(74) Representative: Hoffmann Eitle
(86) International application number: PCT/JP2024/021514
(87) International publication number: WO 2024/257832

(57) **Abstract**

The disclosure provides an electrode mixture sheet having high tensile strength and low resistance, an electrode and a secondary battery each including the electrode mixture sheet, and a method of producing an electrode mixture sheet. An electrode mixture sheet including: a polytetrafluoroethylene; a carbon material; and an electrode active material other than the carbon material and/or a fluororesin other than the polytetrafluoroethylene, the electrode mixture sheet having a value X of 2300 or less, where the value X is expressed as interface length/amount of detected carbon in an image of carbon composition distribution in a 2000x field of view obtained by SEM-EDX analysis.

## Description

### TECHNICAL FIELD

The disclosure relates to electrode mixture sheets, electrodes, secondary batteries, and methods of producing electrode mixture sheets.

### BACKGROUND ART

Secondary batteries such as lithium-ion secondary batteries have high voltage and high energy density with low self-discharge and low memory effect, and can be made extremely lightweight. For these reasons, secondary batteries are used in small and portable electrical and electronic devices such as laptop PCs, cellular phones, smart phones, tablet PCs, and Ultrabooks, and are also being commercialized as a wide variety of power sources, including in-vehicle power sources for driving automobiles and the like and large power sources for stationary applications. Secondary batteries are now required to have even higher energy densities and further improved battery characteristics.

Patent Literature 1 discloses an electrode having a controlled polytetrafluoroethylene distribution in the electrode mixture.

### CITATION LIST

### - Patent Literature

Patent Literature 1: WO 2022/163186

### SUMMARY OF INVENTION

### - Technical Problem

The disclosure aims to provide an electrode mixture sheet having high tensile strength and low resistance, an electrode and a secondary battery each including the electrode mixture sheet, and a method of producing an electrode mixture sheet.

### - Solution to Problem

The disclosure (1) relates to an electrode mixture sheet containing: a polytetrafluoroethylene; a carbon material; and an electrode active material other than the carbon material and/or a fluororesin other than the polytetrafluoroethylene, the electrode mixture sheet having a value X of 2300 or less, where the value X is expressed as interface length/amount of detected carbon in an image of carbon composition distribution in a 2000x field of view obtained by SEM-EDX analysis.

The disclosure (2) relates to the electrode mixture sheet according to the disclosure (1), wherein the value X is 300 or more and 2000 or less.

The disclosure (3) relates to the electrode mixture sheet according to the disclosure (1) or (2), wherein a total amount of the polytetrafluoroethylene and the fluororesin other than the polytetrafluoroethylene is 0.1% by mass or more and 10% by mass or less relative to the electrode mixture sheet.

The disclosure (4) relates to the electrode mixture sheet according to any one of the disclosures (1) to (3), wherein the carbon material is a conductive aid.

The disclosure (5) relates to the electrode mixture sheet according to any one of the disclosures (1) to (4), wherein the electrode active material other than the carbon material is a positive electrode active material.

The disclosure (6) relates to the electrode mixture sheet according to the disclosure (5), wherein an amount of the positive electrode active material is 92% or more and 99% by mass or less relative to the electrode mixture sheet.

The disclosure (7) relates to an electrode including the electrode mixture sheet according to any one of the disclosures (1) to (6).

The disclosure (8) relates to a secondary battery including the electrode according to the disclosure (7).

The disclosure (9) relates to a method of producing an electrode mixture sheet, including: (1) mixing a polytetrafluoroethylene with an electrode active material other than a carbon material and/or a fluororesin other than the polytetrafluoroethylene; and (2) mixing the mixture obtained in the step (1) with a carbon material.

The disclosure (10) relates to the production method according to the disclosure (9), wherein the step (1) includes producing fibrils of the polytetrafluoroethylene by a shear force.

The disclosure (11) relates to the production method according to the disclosure (9) or (10), wherein the mixing in the step (2) is performed with a lower shear force than in the step (1).

The disclosure (12) relates to the production method according to any one of the disclosures (9) to (11), wherein all the components mixed in the step (1) are powder, and the step (1) is performed in the absence of a liquid medium.

The disclosure (13) relates to the production method according to any one of the disclosures (9) to (12), wherein a processing temperature in the step (2) is lower than a processing temperature in the step (1).

The disclosure (14) relates to the production method according to any one of the disclosures (9) to (13), wherein the step (1) and the step (2) are performed using an identical device.

### - Advantageous Effects of Invention

The disclosure can provide an electrode mixture sheet having high tensile strength and low resistance, an electrode and a secondary battery each including the electrode mixture sheet, and a method of producing an electrode mixture sheet.

### BRIEF DESCRIPTION OF DRAWINGS

FIG. 1 shows an example of spectrum data obtained by SEM-EDX analysis.
FIG. 2 shows an example of an image of carbon composition distribution of an electrode mixture sheet in a 2000x field of view obtained by SEM-EDX analysis.
FIG. 3 shows an example of an image obtained by binarizing an image obtained by SEM-EDX analysis.
FIG. 4 schematically shows a method of calculating interface length.

### DESCRIPTION OF EMBODIMENTS

The disclosure will be specifically described hereinbelow.

The disclosure provides an electrode mixture sheet including: a polytetrafluoroethylene (PTFE); a carbon material; and an electrode active material other than the carbon material and/or a fluororesin other than the PTFE, the electrode mixture sheet having a value X of 2300 or less, where the value X is expressed as interface length/amount of detected carbon in an image of carbon composition distribution in a 2000x field of view obtained by SEM-EDX analysis.

With a value X of 2300 or less, the electrode mixture sheet of the disclosure can have improved tensile strength and reduced resistance. This is presumably because with such a value X, the dispersed state and shape of PTFE fibrils around the carbon material are appropriately controlled.

To achieve an even higher tensile strength and an even lower resistance, the value X is preferably 2000 or less, more preferably 1800 or less, still more preferably 1500 or less, further more preferably 1300 or less, while preferably 300 or more, more preferably 450 or more, still more preferably 750 or more.

The value X is determined by the following method.

### <Measurement sample>

The electrode mixture sheet is cut to a size of 1 cm × 1 cm (with any desired thickness) to give a measurement sample. When a measurement sample is prepared from an electrode, a surface including the electrode mixture is cut to the above size to give a measurement sample.

### <Interface length (pix)>

(i) For each measurement sample, images of carbon composition distribution are captured at three points by scanning electron microscopy-energy dispersive X-ray spectrometry (SEM-EDX) analysis in a 2000x field of view at an accelerating voltage of 3000 V and an image size of 1280 × 960. For example, the images are captured at a first point at a center of the measurement sample, and at second and third points shifted to the left and right by 2 mm from the center of the measurement sample. The images can be captured with SU8000 available from Hitachi High-Tech Corporation, for example.
(ii) The images obtained in (i) are binarized. The images, captured with N = 3 per sample, are each divided into intensity levels from 0 to 255, and the threshold of each image is determined by Otsu's method. Subsequently, the average of the binarization thresholds of the images is calculated to determine the average threshold of the sample. Using the average threshold, the images prior to binarization are binarized again.
   Here, Otsu's method is a technique to calculate the binarization threshold. The method identifies a point that maximizes the degree of separation between two peaks in a gray level histogram, and defines the value at the point as the intensity threshold.
(iii) In each image obtained in (ii), the number of elements with a non-zero element difference between pixels is counted and taken as the interface length of the image.

### <Amount of detected carbon (cps/eV)>

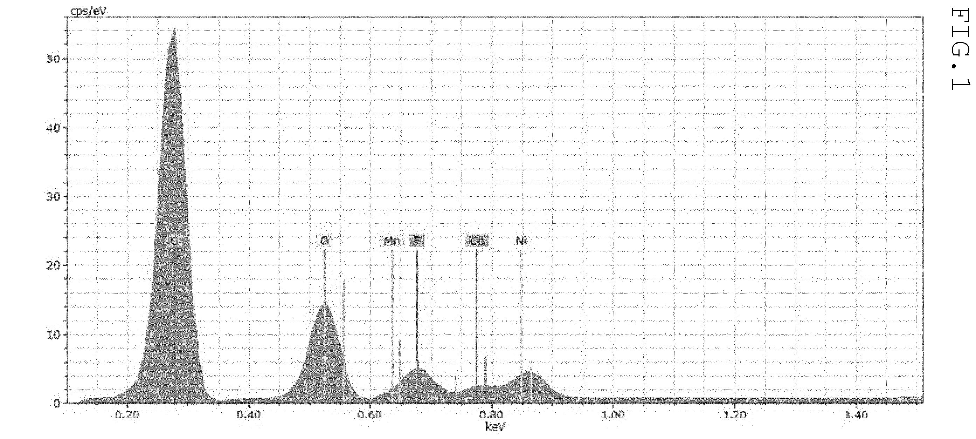

The spectrum data obtained at the same time as the image data of (i) above is used to calculate the amount of detected carbon in each image. The spectrum data is one obtained in the SEM-EDX measurement in which X-ray energy (keV) is on the horizontal axis and X-ray intensity (cps/eV) is on the vertical axis. FIG. 1 shows an example of spectrum data. From the spectrum data, a peak appearing around 0.27 keV, corresponding to the intrinsic energy of carbon, is identified, and the maximum value of the peak on the vertical axis is read. The read value is taken as the amount of detected carbon.

### <Interface length ÷ amount of detected carbon (value X)>

The interface length and the amount of detected carbon calculated in each image are used to calculate the value of interface length ÷ amount of detected carbon for three points per sample. The average (N = 3) is taken as the value (value X) of interface length ÷ amount of detected carbon of the sample.

The method of calculating the interface length is specifically described below with reference to drawings.

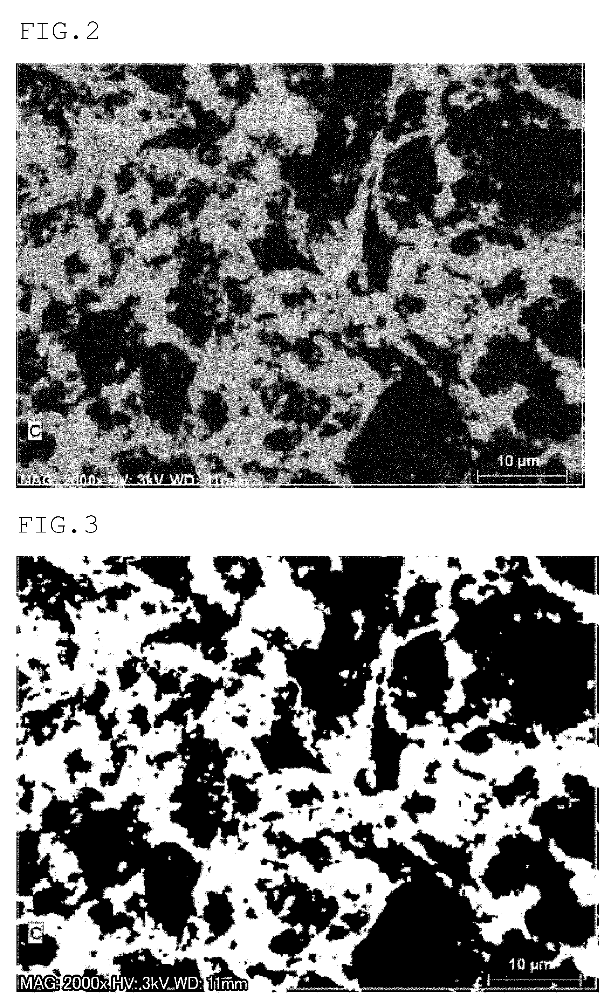

FIG. 2 shows an example of an image of carbon composition distribution of an electrode mixture sheet in a 2000x field of view obtained by SEM-EDX analysis.

Binarizing the image of FIG. 2 by the above method gives the image of FIG. 3.

In this binarized image, the number of elements with a non-zero element difference between pixels is counted and taken as the interface length.

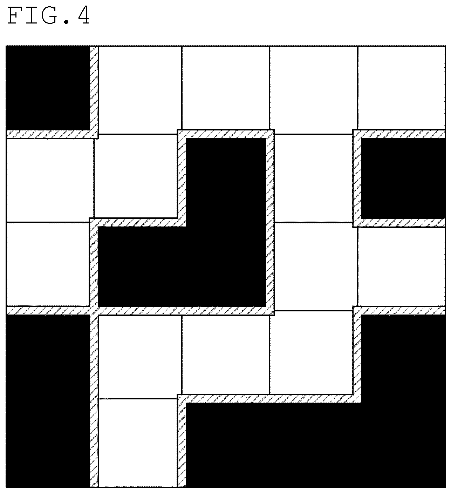

Here, "with a non-zero element difference between pixels" refers to the state where adjacent pixels (cells) have different colors (black or white) as shown in FIG. 4. The sides in contact with such differently colored pixels (sides with hatching in the figure) are counted as the elements with a non-zero element difference between pixels. In FIG. 4, the number of such elements is 21, and the interface length is 21.

The electrode mixture sheet of the disclosure contains a PTFE. The PTFE may be a homopolymer of tetrafluoroethylene (TFE) or may be a modified PTFE containing a polymerized unit based on TFE (TFE unit) and a polymerized unit based on a modifying monomer (hereinafter, also referred to as a "modifying monomer unit"). The modified PTFE may contain 99.0% by mass or more of the TFE unit and 1.0% by mass or less of the modifying monomer unit. The modified PTFE may consist of the TFE unit and the modifying monomer unit.

In order to achieve improved binding force and improved sheet strength and flexibility, the PTFE is preferably the modified PTFE.

In order to achieve improved binding force and improved sheet strength and flexibility, the modified PTFE preferably contains a modifying monomer unit in an amount falling within a range of 0.00001 to 1.0% by mass relative to all polymerized units. The lower limit of the amount of the modifying monomer unit is more preferably 0.0001% by mass, still more preferably 0.001% by mass, further more preferably 0.005% by mass, even more preferably 0.010% by mass. The upper limit of the amount of the modifying monomer unit is preferably 0.90% by mass, more preferably 0.80% by mass, still more preferably 0.50% by mass, further more preferably 0.40% by mass, further more preferably 0.30% by mass.

The modifying monomer unit herein means a portion constituting the molecular structure of PTFE and derived from a modifying monomer.

The amounts of the above polymerized units can be calculated by any appropriate combination of NMR, FT-IR, elemental analysis, and X-ray fluorescence analysis in accordance with the types of the monomers.

The modifying monomer may be any monomer copolymerizable with TFE. Examples thereof include perfluoroolefins such as hexafluoropropylene (HFP); hydrogen-containing fluoroolefins such as trifluoroethylene and vinylidene fluoride (VDF); perhaloolefins such as chlorotrifluoroethylene (CTFE); perfluorovinyl ether; perfluoroallyl ether; a (perfluoroalkyl)ethylene; and ethylene. One modifying monomer may be used alone or two or more modifying monomers may be used in combination.

The perfluorovinyl ether may be, but is not limited to, an unsaturated perfluoro compound represented by the following formula (A):

CF₂=CF-ORf¹ (A)

wherein Rf¹ is a perfluoro organic group.

The "perfluoro organic group" herein means an organic group in which all hydrogen atoms bonded to any carbon atom have been replaced by fluorine atoms. The perfluoro organic group may have ether oxygen.

An example of the perfluorovinyl ether is a perfluoro(alkyl vinyl ether) (PAVE) represented by the formula (A) wherein Rf¹ is a C1-C10 perfluoroalkyl group. The perfluoroalkyl group preferably has a carbon number of 1 to 5.

Examples of the perfluoroalkyl group in the PAVE include a perfluoromethyl group, a perfluoroethyl group, a perfluoropropyl group, a perfluorobutyl group, a perfluoropentyl group, and a perfluorohexyl group.

Examples of the perfluorovinyl ether include a compound represented by the formula (A) wherein Rf¹ is a C4-C9 perfluoro(alkoxyalkyl) group, a compound represented by the formula (A) wherein Rf¹ is a group represented by the following formula: 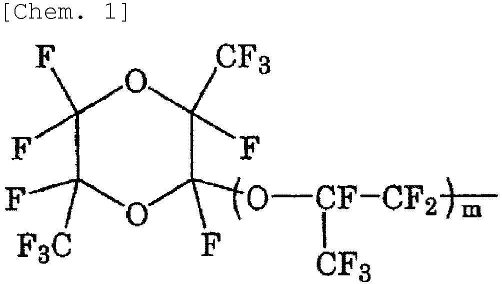 (wherein m is an integer of 0 or 1 to 4), and a compound represented by the formula (A) wherein Rf¹ is a group represented by the following formula: 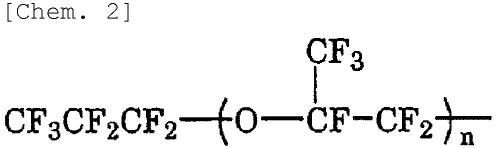 (wherein n is an integer of 1 to 4).

Examples of the (perfluoroalkyl)ethylene (PFAE) include, but are not limited to, (perfluorobutyl)ethylene (PFBE) and (perfluorohexyl)ethylene.

An example of the perfluoroallyl ether is a fluoromonomer represented by the following formula (B):

CF₂=CF-CF₂-ORf² (B)

wherein Rf² is a perfluoro organic group.

Rf² is preferably a C1-C10 perfluoroalkyl group or a C1-C10 perfluoroalkoxyalkyl group. The perfluoroallyl ether preferably includes at least one selected from the group consisting of CF₂=CF-CF₂-O-CF₃, CF₂=CF-CF₂-O-C₂F₅, CF₂=CF-CF₂-O-C₃F₇, and CF₂=CF-CF₂-O-C₄F₉, more preferably includes at least one selected from the group consisting of CF₂=CF-CF₂-O-C₂F₅, CF₂=CF-CF₂-O-C₃F₇, and CF₂=CF-CF₂-O-C₄F₉, and is still more preferably CF₂=CF-CF₂-O-CF₂CF₂CF₃.

In order to achieve improved expandability, improved binding force, and improved flexibility of the mixture sheet, the modifying monomer preferably includes at least one selected from the group consisting of PAVE, HFP, VDF, and CTFE, more preferably includes at least one selected from the group consisting of perfluoro(methyl vinyl ether) (PMVE), HFP, VDF, and CTFE.

The PTFE may have a core-shell structure. An example of the PTFE having a core-shell structure is a modified PTFE including a core of high-molecular-weight PTFE and a shell of lower-molecular-weight PTFE or modified PTFE in a particle. An example of such a modified PTFE is a PTFE disclosed in JP 2005-527652 T.

Examples of PTFEs commonly available on the market include: F-104, F-106, F-107, F-104C, F-121, F-201, F-205, F-208, and F-302 available from Daikin Industries, Ltd.; 60X, 601X, 602X, 605XTX, 613AX, 62X, 62NX, 62XTX, 640XTX, 641XTX, 650XTX, 669X, 669NX, 6CX, 6CNX, CFP6000X, 6J, 6CJ, 62J, 640J, and 641J available from Chemours; TF2029, TF2025Z, TF2053Z, TF2073Z, TF2001Z, TF2071USZ, and TF2072Z available from 3M; CD145, CD123, CD126E, CD097, CD084E, CD086EL, CD086EH, CD090E, CD122E, CD141E, and CD127E available from AGC; and DF681F, DF680F, DF330F, DF291F, DF230F, DF210F, DF132F, DF130F, and DF120F available from Solvay.

To form a mixture sheet with still higher strength, the PTFE preferably has an endothermic peak temperature of 320°C or higher, more preferably 325°C or higher, still more preferably 330°C or higher, further more preferably 335°C or higher, further more preferably 340°C or higher, further more preferably 342°C or higher, particularly preferably 344°C or higher. The endothermic peak temperature is preferably 350°C or lower.

The endothermic peak temperature is the temperature corresponding to the minimum point on a heat-of-fusion curve obtained by performing differential scanning calorimetry (DSC) at a temperature-increasing rate of 10°C/min on a PTFE that has never been heated to a temperature of 300°C or higher. When two or more minimum points are present in one melting peak, the temperatures corresponding to the respective peaks are considered as endothermic peak temperatures.

Preferably, the PTFE has at least one endothermic peak in a range of 333°C to 347°C on a heat-of-fusion curve drawn by increasing the temperature at a rate of 10°C/min using a differential scanning calorimeter (DSC), and has an enthalpy of fusion of 62 mJ/mg or higher at 290°C to 350°C calculated from the heat-of-fusion curve.

The PTFE preferably has a standard specific gravity (SSG) of 2.280 or less, more preferably 2.250 or less, still more preferably 2.220 or less, further more preferably 2.200 or less, further more preferably 2.190 or less, even more preferably 2.180 or less, particularly preferably 2.170 or less.

The SSG is also preferably 2.130 or more.

The SSG is determined by the water displacement method in conformity with ASTM D 792 using a sample molded in conformity with ASTM D 4895 89.

In the electrode mixture sheet of the disclosure, at least part of the PTFE is preferably fibrillated.

The amount of the PTFE is preferably 0.1% by mass or more, more preferably 0.2% by mass or more, still more preferably 0.5% by mass or more relative to the electrode mixture sheet. The amount is also preferably 10% by mass or less, more preferably 5% by mass or less, still more preferably 3% by mass or less.

The electrode mixture sheet of the disclosure contains a carbon material. Examples of the carbon material include a conductive aid and a carbon-based negative electrode active material. Preferred among these is a conductive aid.

The amount of the carbon material is preferably 0.01% by mass or more, more preferably 0.1% by mass or more, still more preferably 1% by mass or more, while preferably 99% by mass or less, more preferably 96% by mass or less, still more preferably 92% by mass or less relative to the electrode mixture sheet.

Non-limiting examples of the conductive aid include carbon materials such as graphite including natural graphite and artificial graphite, carbon black including acetylene black, Ketjen black, channel black, furnace black, lamp black, and thermal black, amorphous carbon including needle coke, carbon nanotubes, fullerene, and VGCF. One of these materials may be used alone or two or more thereof may be used in any combination at any ratio.

The amount of the conductive aid is preferably 0.01% by mass or more, more preferably 0.1% by mass or more, still more preferably 1% by mass or more, while preferably 30% by mass or less, more preferably 15% by mass or less, still more preferably 5% by mass or less relative to the electrode mixture sheet.

The carbon-based negative electrode active material may be, for example, any one selected from artificial graphite, graphite carbon fiber, resin sintered carbon, pyrolytic vapor grown carbon, coke, mesocarbon microbeads (MCMB), furfuryl alcohol resin sintered carbon, polyacene, pitch-based carbon fiber, vapor-grown carbon fiber, natural graphite, and non-graphitizable carbon, or a mixture of two or more of these.

The amount of the carbon-based negative electrode active material is preferably 50% by mass or more, more preferably 60% by mass or more, still more preferably 70% by mass or more, particularly preferably 75% by mass or more, while preferably 99% by mass or less, more preferably 96% by mass or less, still more preferably 92% by mass or less relative to the electrode mixture sheet.

The electrode mixture sheet of the disclosure contains an electrode active material other than the carbon material and/or a fluororesin other than the PTFE (hereinafter also referred to as a different fluororesin).

The amount of the electrode active material other than the carbon material and/or the fluororesin other than the PTFE is preferably 0.01% by mass or more, more preferably 0.1% by mass or more, still more preferably 1% by mass or more, while preferably 99% by mass or less, more preferably 96% by mass or less, still more preferably 92% by mass or less relative to the electrode mixture sheet.

Examples of the electrode active material other than the carbon material include a positive electrode active material and a non-carbon-based negative electrode active material. In particular, the electrode active material other than the carbon material is preferably a positive electrode active material.

The positive electrode active material may be any material that can electrochemically occlude and release alkali metal ions. Still, the positive electrode material is preferably, for example, a material containing an alkali metal and at least one transition metal. Specific examples include alkali metal-containing transition metal composite oxides and alkali metal-containing transition metal phosphate compounds. Particularly preferred among these as the positive electrode material are alkali metal-containing transition metal composite oxides which produce high voltage. Examples of the alkali metal ions include lithium ions, sodium ions, and potassium ions. Lithium ions are preferred.

Examples of the alkali metal-containing transition metal composite oxides include alkali metal-manganese spinel composite oxides (e.g., lithium-manganese spinel composite oxides) represented by the formula:

MₐMn_{2-b}M¹_{b}O₄

wherein M includes at least one metal selected from the group consisting of Li, Na, and K; 0.9 ≤ a; 0 ≤ b ≤ 1.5; and M¹ includes at least one metal selected from the group consisting of Fe, Co, Ni, Cu, Zn, Al, Sn, Cr, V, Ti, Mg, Ca, Sr, B, Ga, In, Si, and Ge;
alkali metal-nickel composite oxides (e.g., lithium-nickel composite oxides) represented by the formula:

   MNi_{1-c}M²_{c}O₂

   wherein M includes at least one metal selected from the group consisting of Li, Na, and K; 0 ≤ c ≤ 0.5; and M² includes at least one metal selected from the group consisting of Fe, Co, Mn, Cu, Zn, Al, Sn, Cr, V, Ti, Mg, Ca, Sr, B, Ga, In, Si, and Ge; and
alkali metal-cobalt composite oxides (e.g., lithiumcobalt composite oxides) represented by the formula:

   MCo_{1-d}M³_{d}O₂
wherein M includes at least one metal selected from the group consisting of Li, Na, and K; 0 ≤ d ≤ 0.5; and M³ includes at least one metal selected from the group consisting of Fe, Ni, Mn, Cu, Zn, Al, Sn, Cr, V, Ti, Mg, Ca, Sr, B, Ga, In, Si, and Ge.

In the above formulas, M is preferably a metal selected from the group consisting of Li, Na, and K, more preferably Li or Na, still more preferably Li.

In order to achieve high-energy-density, high-output secondary batteries, preferred among these are MCoO₂, MMnO₂, MNiO₂, MMn₂O₄, MNi_{0.8}Co_{0.15}Al_{0.05}O₂, and MNi_{1/3}Co_{1/3}Mn_{1/3}O₂, and preferred is a compound represented by the following formula:

MNiₕCoᵢMnⱼM⁵ₖO₂

wherein M includes at least one metal selected from the group consisting of Li, Na, and K; M⁵ includes at least one selected from the group consisting of Fe, Cu, Zn, Al, Sn, Cr, V, Ti, Mg, Ca, Sr, B, Ga, In, Si, and Ge; and (h + i + j + k) = 1.0, 0 ≤ h ≤ 1.0, 0 ≤ i ≤ 1.0, 0 ≤ j ≤ 1.5, and 0 ≤ k ≤ 0.2.

Examples of the alkali metal-containing transition metal phosphate compound include a compound represented by the following formula:

MₑM⁴_{f}(PO₄)_{g}

wherein M includes at least one metal selected from the group consisting of Li, Na, and K; M⁴ includes at least one selected from the group consisting of V, Ti, Cr, Mn, Fe, Co, Ni, and Cu; and 0.5 ≤ e ≤ 3, 1 ≤ f ≤ 2, and 1 ≤ g ≤ 3. In the above formulas, M is preferably a metal selected from the group consisting of Li, Na, and K, more preferably Li or Na, still more preferably Li. In other words, the alkali metal-containing transition metal phosphate compound is preferably a lithium-containing transition metal phosphate compound.

The transition metal of the lithium-containing transition metal phosphate compound is preferably V, Ti, Cr, Mn, Fe, Co, Ni, Cu, or the like. Specific examples thereof include iron phosphates such as LiFePO₄ Li₃Fe₂(PO₄)₃, and LiFeP₂O₇, cobalt phosphates such as LiCoPO₄, and those obtained by replacing some of transition metal atoms as main components of these lithium transition metal phosphate compounds with another element such as Al, Ti, V, Cr, Mn, Fe, Co, Li, Ni, Cu, Zn, Mg, Ga, Zr, Nb, or Si. The lithium-containing transition metal phosphate compound preferably has an olivine structure.

Other examples of the positive electrode active material include a lithium-nickel composite oxide. The lithium-nickel composite oxide is preferably a positive electrode active material represented by the following formula:

Li_{y}Ni₁₋ₓMₓO₂

wherein 0.01 ≤ x ≤ 0.7, 0.9 ≤ y ≤ 2.0, and M is a metal atom (other than Li and Ni).

Other examples of the positive electrode active material include MFePO₄, MNi_{0.8}Co_{0.2}O₂, M_{1.2}Fe_{0.4}Mn_{0.4}O₂, MNi_{0.5}Mn_{1.5}O₂, MV₃O₆, and M₂MnO₃. In particular, a positive electrode active material such as M₂MnO₃ or MNi_{0.5}Mn_{1.5}O₂ is preferred because the crystal structure thereof does not collapse even when the secondary battery is operated at a voltage exceeding 4.4 V or at a voltage of 4.6 V or higher. Accordingly, secondary batteries or other electrochemical devices containing a positive electrode material including the positive electrode active material exemplified above are preferred, because they are resistant to a decrease in remaining capacity or a change in resistance increase rate even after storage at high temperature, and do not deteriorate in battery performance even when operated at high voltage.

Other examples of the positive electrode active material include a solid solution material of M₂MnO₃ and MM⁶O₂ (wherein M includes at least one metal selected from the group consisting of Li, Na, and K; and M⁶ is a transition metal such as Co, Ni, Mn, or Fe).

The solid solution material is, for example, an alkali metal manganese oxide represented by the formula Mx[Mn_{(1-y)}M⁷_{y}]O_{z}. In the formula, M includes at least one metal selected from the group consisting of Li, Na, and K; and M⁷ includes at least one metal element other than M or Mn, containing, for example, one or more elements selected from the group consisting of Co, Ni, Fe, Ti, Mo, W, Cr, Zr, and Sn. The values of x, y, and z in the formula are within the ranges of 1 < x < 2, 0 ≤ y < 1, and 1.5 < z < 3, respectively. In particular, a manganese-containing solid solution material in which LiNiO₂ or LiCoO₂ is dissolved in a Li₂MnO₃ base such as Li_{1.2}Mn_{0.5}Co_{0.14}Ni_{0.14}O₂ is preferred because it can provide an alkali metal ion secondary battery with high energy density.

In order to improve the continuous charge characteristics, the positive electrode active material preferably contains lithium phosphate. Lithium phosphate may be used in any manner, and is preferably used in admixture with the positive electrode active material. The lower limit of the amount of lithium phosphate used is preferably 0.1% by mass or more, more preferably 0.3% by mass or more, still more preferably 0.5% by mass or more relative to the sum of the amounts of the positive electrode active material and lithium phosphate. The upper limit thereof is preferably 10% by mass or less, more preferably 8% by mass or less, still more preferably 5% by mass or less.

To a surface of the positive electrode active material may be attached a substance having a composition different from the positive electrode active material. Examples of the substance attached to the surface include oxides such as aluminum oxide, silicon oxide, titanium oxide, zirconium oxide, magnesium oxide, calcium oxide, boron oxide, antimony oxide, and bismuth oxide; sulfates such as lithium sulfate, sodium sulfate, potassium sulfate, magnesium sulfate, calcium sulfate, and aluminum sulfate; carbonates such as lithium carbonate, calcium carbonate, and magnesium carbonate; and carbon.

One of the aforementioned positive electrode active materials may be used alone or two or more thereof having different compositions may be used in any combination at any ratio. Preferred examples of the combination in this case include a combination of LiCoO₂ with a ternary system such as LiNi_{0.33}Co_{0.33}Mn_{0.33}O₂, a combination of LiCoO₂ with either LiMn₂O₄ or LiMn₂O₄ in which one or more Mn atoms have been replaced by a different transition metal, and a combination of LiFePO₄ with either LiCoO₂ or LiCoO₂ in which one or more Co atoms have been replaced by a different transition metal.

The amount of the positive electrode active material is preferably 50% by mass or more, more preferably 60% by mass or more, still more preferably 70% by mass or more, particularly preferably 75% by mass or more, most preferably 92% by mass or more, while preferably 99% by mass or less, more preferably 98% by mass or less, still more preferably 97% by mass or less relative to the electrode mixture sheet.

The non-carbon-based negative electrode active material may be, for example, any one selected from lithium metal, a silicon containing compound such as silicon or a silicon alloy, and Li₄Ti₅O₁₂, or a mixture of two or more of these.

The non-carbon-based negative electrode active material preferably contains silicon as a constituent element. A negative electrode active material containing silicon as a constituent element enables production of a high-capacity battery.

Preferred materials containing silicon include silicon particles, particles having a structure in which fine silicon particles are dispersed in a silicon-based compound, silicon oxide particles represented by the formula SiOx (0.5 ≤ x ≤ 1.6), and mixtures of these. Use of any of these provides a negative electrode mixture for lithium-ion secondary batteries with higher initial charge/discharge efficiency, high capacity, and excellent cycle characteristics.

The term "silicon oxide" herein is a generic term for amorphous silicon oxides. Silicon oxides prior to disproportionation are represented by the formula: SiOx (0.5 ≤ x ≤ 1.6) where x preferably satisfies 0.8 ≤ x < 1.6, more preferably 0.8 ≤ x < 1.3. This silicon oxide can be obtained, for example, by heating a mixture of silicon dioxide and metal silicon to produce silicon monoxide gas, and cooling the gas for precipitation.

The amount of the non-carbon-based negative electrode active material is preferably 1% by mass or more, more preferably 2% by mass or more, still more preferably 5% by mass or more, particularly preferably 8% by mass or more, while preferably 97% by mass or less, more preferably 90% by mass or less, still more preferably 80% by mass or less relative to the electrode mixture sheet.

Examples of the different fluororesin include: a PTFE (hereinafter also referred to as a "different PTFE") different from the above-described PTFE as an essential component; and a melt-fabricable fluororesin. In order to achieve an even higher tensile strength and an even lower resistance, the different PTFE is preferred.

Examples of the different PTFE include a PTFE differing in composition and/or physical properties from the above-described PTFE as an essential component.

Examples of the PTFE differing in composition include a PTFE differing in the type of the modifying monomer copolymerizable with TFE and/or the amount of polymerized units based on the modifying monomer (modifying monomer units).

A combination of the PTFE as an essential component and a PTFE differing in composition may be, for example, a combination of a TFE homopolymer and a modified PTFE, a combination of two or more modified PTFEs differing in the type of the modifying monomer, or a combination of two or more PTFEs having the same modifying monomer unit but differing in the proportion of the modifying monomer unit. The phrase "differing in the proportion of the modifying monomer unit" means that the difference in the proportion of the modifying monomer unit in all polymerized units (value expressed by "% by mass") is 0.005 or more. The difference in the proportion is preferably 0.10 or more, more preferably 0.15 or more, still more preferably 0.20 or more, while preferably 0.80 or less, more preferably 0.60 or less, still more preferably 0.40 or less.

A combination of a tetrafluoroethylene (TFE) homopolymer and a modified PTFE is particularly preferred.

The TFE homopolymer refers to one in which the amount of modifying monomer units in all polymerized units is less than 0.0001% by mass.

Examples of the modified PTFE as the PTFE differing in composition include the same modified PTFEs as those described for the PTFE as an essential component.

The different PTFE may be a PTFE differing in standard specific gravity (SSG) from the PTFE as an essential component. The phrase "differing in SSG" means that the difference in SSG is 0.005 or more. The difference in SSG is preferably 0.010 or more, more preferably 0.015 or more, still more preferably 0.020 or more, while preferably 0.050 or less, more preferably 0.040 or less, still more preferably 0.030 or less.

The different PTFE may be a PTFE differing in extrusion pressure from the PTFE as an essential component. The phrase "differing in extrusion pressure" means the difference in extrusion pressure is 5 MPa or higher. The difference in extrusion pressure is preferably 10 MPa or higher, more preferably 15 MPa or higher, still more preferably 20 MPa or higher, while preferably 35 MPa or lower, more preferably 30 MPa or lower, still more preferably 25 MPa or lower.

The extrusion pressure is measured by the following method.

The load (N) at which the pressure reaches equilibrium in the later stage of the extrusion operation in the paste extrusion below is divided by the cross-sectional area of the cylinder. The obtained value is taken as the extrusion pressure (MPa).

### (Paste extrusion)

An amount of 60 g of PTFE powder and 12.3 g of a hydrocarbon oil (trade name: Isopar G (registered trademark), ExxonMobil Corp.) as an extrusion aid are mixed for three minutes in a polyethylene container. A cylinder of an extruder is filled with the resulting mixture at room temperature (25 ± 2°C). A load of 0.47 MPa is applied to a piston inserted into the cylinder and maintained for one minute. Then, the mixture is extruded through an orifice at a ram speed of 20 mm/min. The ratio of the cross-sectional area of the cylinder to the cross-sectional area of the orifice is 200.

Examples of the melt-fabricable fluororesin include a tetrafluoroethylene (TFE)/perfluoro(alkyl vinyl ether) (PAVE) copolymer (PFA), a TFE/hexafluoropropylene (HFP) copolymer (FEP), an ethylene (Et)/TFE copolymer (ETFE), an Et/TFE/HFP copolymer (EFEP), polychlorotrifluoroethylene (PCTFE), a chlorotrifluoroethylene (CTFE)/TFE copolymer, a CTFE/TFE/PAVE copolymer, an Et/CTFE copolymer, polyvinyl fluoride (PVF), polyvinylidene fluoride (PVdF), a vinylidene fluoride (VdF)/TFE copolymer, a VdF/HFP copolymer, a VdF/TFE/HFP copolymer, a VdF/HFP/(meth)acrylic acid copolymer, a VdF/CTFE copolymer, a VdF/pentafluoropropylene copolymer, a VdF/PAVE/TFE copolymer, and a TFE/perfluoroalkyl allyl ether copolymer. The perfluoroalkyl allyl ether is a monomer represented by CF₂=CFCF₂-O-Rf³ (Rf³ is a C1-C5 perfluoroalkyl group).

Preferred among these is polyvinylidene fluoride (PVdF).

"Melt-fabricable" herein means that a polymer can be melted and processed using a conventional processing device such as an extruder or an injection molding machine.

The melt-fabricable fluororesin preferably has a melt flow rate (MFR) of 0.1 g/10 min or more, more preferably 0.5 g/10 min or more, while preferably 100 g/10 min or less, more preferably 50 g/10 min or less.

The MFR herein is a value determined in conformity with ASTM D1238 using a melt indexer. The value is obtained as the mass (g/10 min) of the polymer flowing out of a nozzle having an inner diameter of 2 mm and a length of 8 mm per 10 minutes at a measurement temperature (e.g., 372°C for PFA or FEP, 297°C for ETFE) and a load (e.g., 5 kg for PFA, FEP, and ETFE) that are set depending on the type of the fluoropolymer.

The mass ratio of the PTFE as an essential component to the different fluororesin (PTFE/different fluororesin) is preferably 1/99 or more, more preferably 5/95 or more, still more preferably 10/90 or more, further more preferably 15/85 or more, particularly preferably 20/80 or more, while preferably 99/1 or less, more preferably 95/5 or less, still more preferably 90/10 or less, further more preferably 85/15 or less, particularly preferably 80/20 or less.

The total amount of the PTFE as an essential component and the different fluororesin is preferably 0.1% by mass or more, more preferably 0.2% by mass or more, still more preferably 0.5% by mass or more, while preferably 10% by mass or less, more preferably 5% by mass or less, still more preferably 3% by mass or less relative to the electrode mixture sheet.

The electrode mixture sheet of the disclosure particularly preferably contains a PTFE, a carbon material as a conductive aid, and a positive electrode active material. The electrode mixture sheet may be a positive electrode mixture sheet. Examples of the PTFE, conductive aid, and positive electrode active material in this embodiment include those described above.

The amount of the PTFE in the embodiment is preferably 0.1% by mass or more, more preferably 0.2% by mass or more, still more preferably 0.5% by mass or more relative to the electrode mixture sheet. The amount is also preferably 10% by mass or less, more preferably 5% by mass or less, still more preferably 3% by mass or less.

The amount of the carbon material (conductive aid) in the embodiment is preferably 0.01% by mass or more, more preferably 0.1% by mass or more, still more preferably 1% by mass or more, while preferably 30% by mass or less, more preferably 15% by mass or less, still more preferably 5% by mass or less relative to the electrode mixture sheet.

The amount of the positive electrode active material in the embodiment is preferably 50% by mass or more, more preferably 60% by mass or more, still more preferably 70% by mass or more, particularly preferably 75% by mass or more, while preferably 99% by mass or less, more preferably 98% by mass or less, still more preferably 97% by mass or less relative to the electrode mixture sheet.

In the electrode mixture sheet of the disclosure, the PTFE as an essential component and the different fluororesin (if present) act as binders. The electrode mixture sheet may further contain a different binder.

Non-limiting examples of the different binder include: resin polymers such as polyethylene, polypropylene, polyethylene terephthalate, polymethyl methacrylate, aromatic polyamides, chitosan, alginic acid, polyacrylic acid, polyimides, cellulose, and nitrocellulose; rubber polymers such as styrene-butadiene rubber (SBR), isoprene rubber, butadiene rubber, fluororubber, acrylonitrile-butadiene rubber (NBR), and ethylene-propylene rubber; styrene-butadiene-styrene block copolymers and hydrogenated products thereof; thermoplastic elastomer polymers such as ethylene-propylene-diene terpolymers (EPDM), styrene-ethylene-butadiene-styrene copolymers, and styrene-isoprene-styrene block copolymers and hydrogenated products thereof; soft resin polymers such as syndiotactic-1,2-polybutadiene, polyvinyl acetate, ethylene-vinyl acetate copolymers, and propylene-α-olefin copolymers; and polymer compositions having conductivity of alkali metal ions (particularly lithium ions). One of these materials may be used alone or two or more thereof may be used in any combination at any ratio.

The amount of the different binder is usually 0.01 to 3% by mass relative to the electrode mixture sheet.

The electrode mixture sheet of the disclosure may further contain a solid electrolyte. In other words, the electrode mixture sheet of the disclosure may be an electrode mixture sheet for solid-state batteries that contains an electrode active material and a solid electrolyte.

The solid electrolyte may be a sulfide-based solid electrolyte or an oxide-based solid electrolyte. In particular, a sulfide-based solid electrolyte advantageously improves the flexibility of the sheet.

The sulfide-based solid electrolyte is not limited, and may be any one selected from Li₂S-P₂S₅, Li₂S-P₂S₃, Li₂S-P₂S₃-P₂S₅, Li₂S-SiS₂, LiI-Li₂S-SiS₂, LiI-Li₂S-P₂S₅, LiI-Li₂S-P₂O₅, LiI-Li₃PO₄-P₂S₅, LiI-Li₂S-SiS₂-P₂S₅, Li₂S-SiS₂-Li₄SiO₄ Li₂S-SiS₂-Li₃PO₄, Li₃PS₄-Li₄GeS₄, Li_{3.4}P_{0.6}Si_{0.4}S₄, Li_{3.25}P_{0.25}Ge_{0.76}S₄, Li₄₋ₓGe₁₋ₓPₓS₄ (x = 0.6 to 0.8), Li_{4+y}Ge_{1-y}Ga_{y}S₄ (y = 0.2 to 0.3), LiPSCl, LiCl, Li_{7-x-2y}PS_{6-x-y}Clₓ (0.8 ≤ x ≤ 1.7, 0 < y ≤ -0.25x + 0.5), and Li₁₀SnP₂S₁₂, or a mixture of two or more of these.

The sulfide-based solid electrolyte preferably contains lithium. Sulfide-based solid electrolytes containing lithium are used in solid-state batteries that use lithium ions as carriers, and are particularly preferred in that they provide electrochemical devices having high energy density.

The oxide-based solid electrolyte is preferably a compound that contains an oxygen atom (O), has conductivity of metal ions belonging to Group 1 or Group 2 of the periodic table, and has electronic insulating properties.

Specific examples of the compound include LiₓₐLa_{ya}TiO₃ (xa = 0.3 to 0.7, ya = 0.3 to 0.7) (LLT), Li_{xb}La_{yb}Zr_{zb}M^{bb}_{mb}O_{nb} (wherein M^{bb} includes at least one element selected from Al, Mg, Ca, Sr, V, Nb, Ta, Ti, Ge, In, and Sn; xb satisfies 5 ≤ xb ≤ 10; yb satisfies 1 ≤ yb ≤ 4; zb satisfies 1 ≤ zb ≤ 4; mb satisfies 0 ≤ mb ≤ 2; and nb satisfies 5 ≤ nb ≤ 20), Li_{xc}B_{yc}M^{cc}_{zc}O_{nc} (wherein M^{cc} includes at least one element selected from C, S, Al, Si, Ga, Ge, In, and Sn; xc satisfies 0 ≤ xc ≤ 5; yc satisfies 0 ≤ yc ≤ 1; zc satisfies 0 ≤ zc ≤ 1; and nc satisfies 0 ≤ nc ≤ 6), Li_{xd}(Al,Ga)_{yd}(Ti,Ge)_{zd}Si_{ad}P_{md}O_{nd} (1 ≤ xd ≤ 3, 0 ≤ yd ≤ 2, 0 ≤ zd ≤ 2, 0 ≤ ad ≤ 2, 1 ≤ md ≤ 7, and 3 ≤ nd ≤ 15), Li₍₃₋₂ₓₑ₎M^{ee}ₓₑD^{ee}O (wherein xe is a number of 0 or greater and 0.1 or smaller, M^{ee} is a divalent metal atom, D^{ee} is a halogen atom or a combination of two or more halogen atoms), Li_{xf}Si_{yf}O_{zf} (1 ≤ xf ≤ 5, 0 <yf ≤ 3, and 1 ≤ zf ≤ 10), Li_{xg}S_{yg}O_{zg} (1 ≤ xg ≤ 3, 0 < yg ≤ 2, and 1 ≤ zg ≤ 10), Li₃BO₃-Li₂SO₄, Li₂O-B₂O₃-P₂O, Li₂O-SiO₂, Li₆BaLa₂Ta₂O₁₂, Li₃PO_{(4-3/2w)}N_{w} (w < 1), Li_{3.5}Zn_{0.25}GeO₄ having a lithium super ionic conductor (LISICON) crystal structure, La_{0.51}Li_{0.34}TiO_{2.94} having a perovskite crystal structure, La_{0.55}Li_{0.35}TiO₃, LiTi₂P₃O₁₂ having a natrium super ionic conductor (NASICON) crystal structure, Li_{1+xh+yh} (Al, Ga)ₓₕ(Ti,Ge) ₂₋ₓₕSi_{yh}P_{3-yh}O₁₂ (0 ≤ xh ≤ 1 and 0 ≤ yh ≤ 1), and Li₇La₃Zr₂O₁₂ (LLZ) having a garnet crystal structure. Ceramic materials in which element substitution is performed for LLZ are also known. Examples thereof include Li_{6.24}La₃Zr₂Al_{0.24}O_{11.98} and Li_{6.25}Al_{0.25}La₃Zr₂O₁₂ in which partial element substitution using Al is performed for LLZ, Li_{6.6}La₃Zr_{1.6}Ta_{0.4}O₁₂ in which partial element substitution using Ta is performed for LLZ, and Li_{6.75}La₃Zr_{1.75}Nb_{0.25}O₁₂ in which partial element substitution using Nb is performed for LLZ. Other examples include LLZ-based ceramic materials in which element substitution using at least one of magnesium (Mg) and A (A includes at least one element selected from the group consisting of calcium (Ca), strontium (Sr), and barium (Ba)) is performed for LLZ. Phosphorus compounds containing Li, P and O are also desirable. Examples include lithium phosphate (Li₃PO₄), LiPON in which one or more oxygen atoms in lithium phosphate are replaced with nitrogen, and LiPOD¹ (wherein D¹ includes at least one selected from Ti, V, Cr, Mn, Fe, Co, Ni, Cu, Zr, Nb, Mo, Ru, Ag, Ta, W, Pt, Au, and the like). LiA¹ON (wherein A¹ includes at least one selected from Si, B, Ge, Al, C, Ga, and the like) can also be preferably used. Specific examples include Li₂O-Al₂O₃-SiO₂-P₂O₅-TiO₂-GeO₂ and Li₂O-Al₂O₃-SiO₂- P₂O₅-TiO₂.

The oxide-based solid electrolyte preferably contains lithium. Oxide-based solid electrolytes containing lithium are used in solid-state batteries that use lithium ions as carriers, and are particularly preferred in that they provide electrochemical devices having high energy density.

The oxide-based solid electrolyte is preferably an oxide having a crystal structure. Oxides having a crystal structure are particularly preferred in terms of good Li ion conductivity. The oxide having a crystal structure may be of perovskite type (La_{0.51}Li_{0.34}TiO_{2.94} etc.), NASICON type (Li_{1.3}Al_{0.3}Ti_{1.7}(PO₄)₃ etc.), or garnet type (Li₇La₃Zr₂O₁₂ (LLZ) etc.). Preferred among these is the NASICON type.

The volume average particle size of the oxide solid electrolyte is not limited. Still, the volume average particle size is preferably 0.01 µm or greater, more preferably 0.03 µm or greater. The upper limit is preferably 100 µm or smaller, more preferably 50 µm or smaller. The average particle size of the oxide-based solid electrolyte particles is measured by the following procedure. A 1% by mass dispersion of the oxide-based solid electrolyte particles is prepared by dilution with water (or heptane in the case of a substance unstable in water) in a 20-mL sample bottle. The diluted dispersion sample is irradiated with 1-kHz ultrasonic waves for 10 minutes, and immediately thereafter used for the test. Data is acquired from this dispersion sample 50 times using a quartz cell for measurement at a temperature of 25°C with a laser diffraction/scattering particle size distribution analyzer LA-920 (HORIBA), and the volume average particle size was determined. For other detailed conditions and the like, JIS Z8828:2013 "Particle size analysis - Dynamic light scattering" is referred as necessary. Five samples are prepared for each level and the average value is used.

The amount of the solid electrolyte is preferably 10% by mass or more, more preferably 15% by mass or more, still more preferably 20% by mass or more, while preferably 50% by mass or less, more preferably 40% by mass or less, still more preferably 35% by mass or less relative to the electrode mixture sheet.

The electrode mixture sheet of the disclosure preferably has a thickness of 300 µm or smaller, more preferably 250 µm or smaller, still more preferably 200 µm or smaller, further more preferably 180 µm or smaller, particularly preferably 150 µm or smaller, while preferably 10 µm or greater, more preferably 15 µm or greater, still more preferably 20 µm or greater.

The electrode mixture sheet of the disclosure preferably has a tensile strength of 0.10 N/mm² or more, more preferably 0.15 N/mm² or more, still more preferably 0.20 N/mm² or more, further more preferably 0.25 N/mm² or more, particularly preferably 0.30 N/mm² or more. The electrode mixture sheet may have a tensile strength of 1.5 N/mm² or less or 1.0 N/mm² or less.

The tensile strength is measured by the following method.

The electrode mixture sheet is cut to give a stripshaped test piece with a width of 4 mm. A tensile tester (AGS-100NX, available from Shimadzu Corp.) is used to perform measurement at 100 mm/min. The chuck distance is set to 40 mm. A displacement is applied to the test piece until breaking, and the maximum stress of the measured results is taken as the tensile strength.

The electrode mixture sheet of the disclosure preferably has a resistance of less than 200 Q-cm, more preferably less than 150 Ω·cm, still more preferably 100 Q-cm or less, further more preferably 80 Q-cm or less, particularly preferably 50 Q-cm or less. The electrode mixture sheet may have a resistance of 0.1 Ω·cm or more.

The resistance is measured by the following method.

The electrode mixture sheet is subjected to measurement by a four-terminal/four-point probe method (Loresta GP (MCP-T610) available from Mitsubishi Chemical Analytech Co., Ltd.) to determine the surface resistivity (Ω/□) of the mixture layer. After the measurement, the surface resistivity (Ω/□) is multiplied by the thickness of the mixture layer to give the volume resistivity (Ω·cm) of the electrode mixture sheet. The thickness of the mixture layer is the average thickness of three points in the electrode mixture sheet measured using a micrometer.

For example, the electrode mixture sheet of the disclosure can be obtained by a method of producing an electrode mixture sheet, including: (1) mixing a PTFE with an electrode active material other than a carbon material and/or a fluororesin (different fluororesin) other than the PTFE; and (2) mixing the mixture obtained in the step (1) with a carbon material.

The disclosure also relates to this production method.

Adding the carbon material after other components can reduce damage to the carbon material caused by shear forces that produce fibrils. This is considered to reduce the damage to the conductive paths and lower the resistance.

The PTFE, the electrode active material other than a carbon material, and the different fluororesin in the step (1) are the same as those described for the electrode mixture sheet of the disclosure. When a solid electrolyte is used, it is preferably mixed in the step (1).

The components mixed in the step (1) are preferably powder.

The carbon material is preferably not mixed in the step (1).

The step (1) is preferably performed in the absence of a liquid medium.

An example of the mixing method in the step (1) is mixing using a single screw kneader, a twin-screw kneader, a muller mixer, a high-speed stirring mixer, a planetary mixer, a jet mill, or the like. For the mixing conditions in the step (1), the number of rotations and the mixing duration may be set as appropriate. For example, the number of rotations is suitably 10000 rpm or less. The number of rotations is preferably 500 rpm or more, more preferably 1000 rpm or more, still more preferably 1500 rpm or more, while preferably 8000 rpm or less, more preferably 6000 rpm or less, still more preferably 5000 rpm or less. At a number of rotations below this range, mixing may take a long time, adversely affecting the productivity. At a number of rotations above the range, fibrillation may proceed excessively, resulting in an electrode mixture sheet having poor strength and poor flexibility. For example, the mixing time is preferably 60 minutes or shorter. The mixing time is preferably 1 minute or longer, more preferably 2 minutes or longer, still more preferably 3 minutes or longer, while preferably 30 minutes or shorter, more preferably 20 minutes or shorter, still more preferably 10 minutes or shorter.

The step (1) preferably includes producing fibrils of the PTFE by a shear force.

The processing temperature in the step (1) may be set as appropriate. For example, the processing temperature is preferably 150°C or lower, more preferably 120°C or lower, still more preferably 100°C or lower, while preferably 30°C or higher, more preferably 40°C or higher, still more preferably 50°C or higher.

In the step (1), after the materials are mixed, the mixture may be formed into a bulky shape. Specific examples of methods of forming into a bulky shape include extrusion molding and press molding. The term "bulky" does not specify the shape and means any state of single mass, including a rod shape, a sheet shape, a spherical shape, a cubic shape, and the like.

In the production method, preferably, neither the electrode active material other than a carbon material nor the different fluororesin is newly added after the completion of the step (1).

In the step (2), the mixture obtained in the step (1) is mixed with a carbon material. Adding the carbon material after the electrode active material other than a carbon material and the different fluororesin in this manner can make it easy to adjust the value X to the above-described range, resulting in an electrode mixture sheet with high tensile strength and low resistance.

The carbon material in the step (2) is the same as that described for the electrode mixture sheet of the disclosure.

The step (2) is preferably performed in the absence of a liquid medium.

Examples of the mixing method in the step (2) include the mixing method in the step (1), as well as mixing using a W-shaped mixer, a V-shaped mixer, a drum mixer, a ribbon mixer, a conical screw mixer, or the like.

The mixing in the step (2) is preferably performed by a lower shear force than in the step (1). Mixing in this manner can make it even easier to adjust the value X to the above-described range, resulting in an electrode mixture sheet with even higher tensile strength and even lower resistance.

The shear force in the step (2) can be adjusted to be lower than in the step (1) by using a device capable of applying a lower shear force than in the step (1), or by setting one or more of the processing time, the rotation speed of the device, the charge amount, and the processing temperature to be lower than in the step (1).

The step (2) may be performed under any mixing conditions as long as a lower shear force than in the step (1) can be applied. The step (2) can be performed using a processing device with a mechanism that does not apply a strong shear force, such as a W-shaped mixer, a V-shaped mixer, a drum mixer, a ribbon mixer, or a conical screw mixer. The processing devices usable in the step (1) can also mix and disperse the materials while applying a weaker shear force when one or more of the processing time, the rotation speed, the charge amount, and the processing temperature are set to be lower than in the step (1).

The processing time is preferably shorter than in the step (1). The processing time is preferably at most 0.9 times, more preferably at most 0.8 times, still more preferably at most 0.6 times the processing time in the step (1), while preferably at least 0.1 times, more preferably at least 0.2 times, still more preferably at least 0.3 times the processing time in the step (1).

The rotation speed is preferably lower than in the step (1). The rotation speed is preferably at most 0.9 times, more preferably at most 0.8 times, still more preferably at most 0.7 times the rotation speed in the step (1), while preferably at least 0.01 times, more preferably at least 0.05 times, still more preferably at least 0.1 times, further more preferably at least 0.2 times the rotation speed in the step (1).

The charge amount is preferably smaller than in the step (1). The charge amount is preferably at most 0.9 times, more preferably at most 0.8 times, still more preferably at most 0.6 times the charge amount in the step (1), while preferably at least 0.2 times, more preferably at least 0.3 times, still more preferably at least 0.4 times the charge amount in the step (1).

The processing temperature is preferably lower than in the step (1). The processing temperature is preferably at least 10°C, more preferably at least 20°C, still more preferably at least 30°C lower than the processing temperature in the step (1), while preferably at most 200°C, more preferably at most 150°C, still more preferably at most 100°C lower than the processing temperature in the step (1).

The step (2) is preferably performed using an identical device to that in the step (1). The step (2) is particularly preferably performed using an identical device to that in the step (1) at a different rotation speed and a different processing time.

The production method preferably further includes a step (3) of rolling the electrode mixture obtained in the step (2) into a sheet.

A specific example of a rolling method in the step (3) is rolling using a roller press, a flat plate press, a calender roller, or the like.

Preferred among them are a roller press including opposing metal rolls and a calender roller further including multiple metal rolls.

The opposing metal rolls preferably have different speeds. The downstream roll preferably has a transfer speed of preferably at least 1.1 times, more preferably at least 1.3 times, still more preferably at least 1.5 times the transfer speed of the upstream roll. There is no particular upper limit for the transfer speed of the upstream roll. The upstream roll preferably runs without stopping, even if at low speed.

The step (3) may be followed by a step (4) of applying a larger load to the resulting rolled sheet to form a thinner sheet. The step (4) may be repeated. Rolling the sheet in steps in this manner, instead of thinning the rolled sheet in one time, leads to better flexibility. The step (4) is performed preferably 2 to 10 times, more preferably 3 to 9 times. A specific rolling method may involve, for example, rotating two or more rolls and passing the rolled sheet therebetween to provide a thinner sheet.

The processing temperature in the steps (3) and (4) may be set as appropriate. For example, the processing temperature is preferably 250°C or lower, more preferably 200°C or lower, still more preferably 180°C or lower, while preferably 30°C or higher, more preferably 40°C or higher, still more preferably 50°C or higher. Heating softens the material, leading to more improved processability.

The electrode mixture sheet of the disclosure may be used as an electrode mixture sheet for secondary batteries. The electrode mixture sheet may be for either a negative electrode or a positive electrode. In particular, the electrode mixture sheet is suitable for lithium-ion secondary batteries.

The disclosure also provides an electrode including the electrode mixture sheet of the disclosure. The electrode of the present disclosure has high tensile strength and low resistance.

The electrode of the present disclosure may include the electrode mixture sheet of the disclosure and a current collector.

The electrode of the disclosure may be a positive electrode or a negative electrode.

The positive electrode is preferably composed of a current collector and an electrode mixture sheet containing the positive electrode active material. Examples of the material of the current collector for a positive electrode include metal materials such as aluminum, titanium, tantalum, stainless steel, and nickel, and alloys thereof; and carbon materials such as carbon cloth and carbon paper. Preferred is any metal material, especially aluminum or an alloy thereof.

In the case of a metal material, the current collector may be in the form of metal foil, metal cylinder, metal coil, metal plate, expanded metal, punched metal, metal foam, or the like. In the case of a carbon material, it may be in the form of carbon plate, carbon film, carbon cylinder, or the like. Preferred among these is metal foil. The metal foil may be in the form of mesh, as appropriate. The metal foil may have any thickness. The thickness is usually 1 µm or greater, preferably 3 µm or greater, more preferably 5 µm or greater, while usually 1 mm or smaller, preferably 100 µm or smaller, more preferably 50 µm or smaller. The metal foil thinner than this range may have insufficient strength as a current collector. Conversely, the metal foil thicker than the above range may have poor handleability.

In order to reduce the electric contact resistance between the current collector and the positive electrode active material layer, the current collector also preferably has a conductive aid applied onto the surface thereof. Examples of the conductive aid include carbon and noble metals such as gold, platinum, and silver.

The positive electrode may be produced by a usual method. For example, the positive electrode may be produced by a method involving laminating the electrode mixture sheet and the current collector via an adhesive and vacuum-drying the laminate.

The positive electrode mixture sheet preferably has a density of 2.80 g/cm³ or higher, more preferably 3.00 g/cm³ or higher, still more preferably 3.20 g/cm³ or higher, while preferably 3.80 g/cm³ or lower, more preferably 3.75 g/cm³ or lower, still more preferably 3.70 g/cm³ or lower. The positive electrode mixture sheet having a density higher than the above range may have low permeability to the electrolyte solution toward the vicinity of the interface between the current collector and the active material, causing poor charge and discharge characteristics particularly at high current density and failing to provide high output. The positive electrode mixture sheet having a density lower than the above range may cause poor conductivity between the active materials and increase the battery resistance, failing to provide high output.

The negative electrode is preferably composed of a current collector and an electrode mixture sheet containing the negative electrode active material. Examples of the material of the current collector for a negative electrode include metal materials such as copper, nickel, titanium, tantalum, and stainless steel, and alloys thereof; and carbon materials such as carbon cloth and carbon paper. Preferred is any metal material, especially copper, nickel, or an alloy thereof.

In the case of a metal material, the current collector may be in the form of metal foil, metal cylinder, metal coil, metal plate, expanded metal, punched metal, metal foam, or the like. In the case of a carbon material, it may be in the form of carbon plate, carbon film, carbon cylinder, or the like. Preferred among these is metal foil. The metal foil may be in the form of mesh, as appropriate. The metal foil may have any thickness. The thickness is usually 1 µm or greater, preferably 3 µm or greater, more preferably 5 µm or greater, while usually 1 mm or smaller, preferably 100 µm or smaller, more preferably 50 µm or smaller. The metal foil thinner than this range may have insufficient strength as a current collector. Conversely, the metal foil thicker than the above range may have poor handleability.

The negative electrode may be produced by a usual method. For example, the negative electrode may be produced by a method involving laminating the electrode mixture sheet and the current collector via an adhesive and vacuum-drying the laminate.

The negative electrode mixture sheet preferably has a density of 1.3 g/cm³ or higher, more preferably 1.4 g/cm³ or higher, still more preferably 1.5 g/cm³ or higher, while preferably 2.0 g/cm³ or lower, more preferably 1.9 g/cm³ or lower, still more preferably 1.8 g/cm³ or lower. The negative electrode mixture sheet having a density higher than the above range may have low permeability to the electrolyte solution toward the vicinity of the interface between the current collector and the active material, causing poor charge and discharge characteristics particularly at high current density and failing to provide high output. The negative electrode mixture sheet having a density lower than the above range may cause poor conductivity between the active materials and increase the battery resistance, failing to provide high output.

The disclosure also provides a secondary battery including the above-described electrode of the disclosure.

The secondary battery may be a secondary battery obtainable by use of an electrolyte solution or may be a solid-state secondary battery.

The solid-state secondary battery herein is a secondary battery containing a solid electrolyte. It may be a semi-solid-state secondary battery containing, as an electrolyte, a solid electrolyte and a liquid component, or an all-solid-state secondary battery containing a solid electrolyte alone as an electrolyte.

The secondary battery obtainable by use of an electrolyte solution may include components used in known secondary batteries such as an electrolyte solution and a separator. These will be described in detail below.

The electrolyte solution is preferably a non-aqueous electrolyte solution. The non-aqueous electrolyte solution used may be a solution obtained by dissolving a known electrolyte salt in a known organic solvent for dissolving an electrolyte salt.

The organic solvent for dissolving an electrolyte salt may be any organic solvent, and may be one or more of known hydrocarbon solvents such as propylene carbonate, ethylene carbonate, butylene carbonate, γ-butyrolactone, 1,2-dimethoxyethane, 1,2-diethoxyethane, dimethyl carbonate, diethyl carbonate, and ethyl methyl carbonate; and fluorine solvents such as fluoroethylene carbonate, fluoroether, and fluorinated carbonate.

The electrolyte salt may be a lithium salt. Examples of the lithium salt include LiClO₄, LiAsF₆, LiBF₄, LiPF₆, LiN(SO₂CF₃)₂, and LiN(SO₂C₂F₅)₂. In order to achieve favorable cycle characteristics, particularly preferred is LiPF₆, LiBF₄, LiN(SO₂CF₃)₂, LiN(SO₂C₂F₅)₂, and a combination of any of these.

The electrolyte salt preferably has a concentration of 0.8 mol/L or higher, more preferably 1.0 mol/L or higher. The upper limit is usually 2.0 mol/L, though it depends on the organic solvent for dissolving an electrolyte salt used.

The secondary battery obtainable by use of an electrolyte solution preferably further includes a separator. The separator may be formed from any known material and may have any known shape as long as the resulting separator is stable to the electrolyte solution and excellent in a liquid-retaining ability. The separator is preferably in the form of a porous sheet or a nonwoven fabric which is formed from a material stable to the electrolyte solution, such as resin, glass fiber, or inorganic matter, and which has an excellent liquid-retaining ability.

Examples of the material of a resin or glass-fiber separator include polyolefins such as polyethylene and polypropylene, aromatic polyamide, polytetrafluoroethylene, polyether sulfone, and glass filters. One of these materials may be used alone or two or more thereof may be used in any combination at any ratio, for example, in the form of a polypropylene/polyethylene bilayer film or a polypropylene/polyethylene/polypropylene trilayer film. In order to achieve good permeability to the electrolyte solution and a good shut-down effect, the separator is preferably a porous sheet or a nonwoven fabric formed from a polyolefin such as polyethylene or polypropylene.

The separator may have any thickness. The thickness is usually 1 µm or greater, preferably 5 µm or greater, more preferably 8 µm or greater, while usually 50 µm or smaller, preferably 40 µm or smaller, more preferably 30 µm or smaller. The separator thinner than the above range may have poor insulation and mechanical strength. The separator thicker than the above range may cause not only poor battery performance such as poor rate characteristics but also a low energy density of the whole electrolyte battery.

Examples of the inorganic matter include oxides such as alumina and silicon dioxide, nitrides such as aluminum nitride and silicon nitride, and sulfates such as barium sulfate and calcium sulfate, each in the form of particles or fibers.

The separator is in the form of a thin film such as a nonwoven fabric, a woven fabric, or a microporous film. The thin film favorably has a pore size of 0.01 to 1 µm and a thickness of 5 to 50 µm. Instead of the above separate thin film, the separator may be one obtained by forming a composite porous layer containing particles of the above inorganic matter on a surface of the positive electrode and/or the negative electrode using a resin binder. For example, alumina particles having a 90% particle size of smaller than 1 µm may be applied to both surfaces of the positive electrode with a fibrillatable resin used as a binder to form porous layers.

The external case may be made of any material that is stable to an electrolyte to be used. Specific examples thereof include metals such as nickel-plated steel plates, stainless steel, aluminum and aluminum alloys, and magnesium alloys, and a layered film (laminate film) of resin and aluminum foil. In order to reduce the weight, a metal such as aluminum or an aluminum alloy or a laminate film is favorably used.

An external case made of metal may have a sealed-up structure formed by welding the metal by laser welding, resistance welding, or ultrasonic welding, or a caulking structure using the metal with a resin gasket in between. An external case made of a laminate film may have a sealed-up structure formed by hot-melting resin layers. In order to improve the sealability, a resin which is different from the resin of the laminate film may be disposed between the resin layers. Especially in the case of forming a sealed-up structure by hot-melting the resin layers with current collecting terminals in between, metal and resin are to be bonded. Thus, the resin to be disposed between the resin layers is favorably a resin having a polar group or a modified resin having a polar group introduced therein.

The secondary battery obtainable by use of an electrolyte solution may have any shape, such as a cylindrical shape, a square shape, a laminate shape, a coin shape, or a large-size shape. The shapes and the structures of the positive electrode, the negative electrode, and the separator may be changed in accordance with the shape of the battery.

The solid-state secondary battery is preferably an all-solid-state secondary battery. The solid-state secondary battery is preferably a lithium-ion battery. The solid-state secondary battery is also preferably a sulfide-based all-solid-state secondary battery.

The solid-state secondary battery preferably includes a positive electrode, a negative electrode, and a solid electrolyte layer between the positive electrode and the negative electrode.

Examples of the solid electrolyte used in the solid electrolyte layer include the same solid electrolytes as those usable in the above-described electrode mixture sheet of the disclosure.

The solid-state secondary battery may include a separator between the positive electrode and the negative electrode. Examples of the separator include porous films such as polyethylene and polypropylene films; nonwoven fabrics made of resin such as polypropylene, and nonwoven fabrics such as glass fiber nonwoven fabrics.

The solid-state secondary battery may further include a battery case. The battery case may have any shape that can accommodate the above-mentioned components including the positive electrode, the negative electrode, and the solid electrolyte layer. Specifically, the battery case may have a cylindrical shape, a square shape, a coin shape, or a laminate shape, for example.

The solid-state secondary battery can be produced by, for example, laminating a positive electrode, a solid electrolyte layer sheet, and a negative electrode in this order and pressing them.

The embodiments have been described above, and it will be understood that various changes in form or detail can be made without departing from the gist and scope of the claims.

### EXAMPLES

The disclosure is more specifically described hereinbelow with reference to examples, but the disclosure should not be limited to these examples.

PTFE-1 and PTFE-2 were prepared and analyzed by the following methods.

### <Average primary particle size>

An aqueous PTFE dispersion was diluted with water to a solid concentration of 0.15% by mass. The transmittance of 550-nm light relative to the unit length of the resulting diluted latex was measured. The Feret diameters in a transmission electron microscopic image were measured and the number-based length average primary particle size was determined therefrom. A calibration curve was obtained from these values. Using this calibration curve, the average primary particle size was determined from the measured transmittance of 550-nm light incident on each sample.

### <Polymer solid concentration>

An aqueous PTFE dispersion in an amount of 1 g was dried in an air dryer at 150°C for 60 minutes, and the ratio of the mass of the heating residue to the mass (1 g) of the aqueous dispersion, expressed as a percentage, was used as the polymer solid concentration.

### <Amount of modifying monomer>

The PTFE powder or composition was press-molded into a thin-film disc and the thin-film disc was subjected to FT-IR measurement, so that infrared absorbances were obtained. The CTFE content was determined by multiplying the ratio (absorbance at 957 cm⁻¹)/(absorbance at 2360 cm⁻¹) by 0.58.

### <Standard specific gravity (SSG)>

The SSG was determined by the water displacement method in conformity with ASTM D 792 using a sample molded in conformity with ASTM D4895-89.

White solid A was obtained by the method disclosed in Synthesis Example 1 of WO 2021/045228.

### Manufacturing Example 1

A 6-L stainless-steel autoclave equipped with a stirring blade and a temperature-controlling jacket was charged with 3480 g of deionized water, 100 g of paraffin wax, and 5.3 g of white solid A. The inside of the autoclave was purged with nitrogen gas with warming to 70°C to remove oxygen. TFE was injected to set the pressure inside the system to 0.78 MPaG and the temperature inside the system was maintained at 70°C under stirring. Next, an aqueous solution prepared by dissolving 15.0 mg of ammonium persulfate in 20 g of water was injected with TFE, whereby a polymerization reaction was started. The pressure inside the system dropped as the polymerization reaction progressed. TFE was thus added so that the temperature inside the system was maintained at 70°C and the pressure inside the system was maintained at 0.78 MPaG.

When 400 g of TFE had been consumed from the start of the polymerization, an aqueous solution prepared by dissolving 18.0 mg of hydroquinone serving as a radical scavenger in 20 g of water was injected with TFE. The polymerization was further continued. When the amount of TFE polymerized reached approximately 1200 g from the start of the polymerization, stirring and feeding of TFE were stopped. Immediately thereafter, the gas inside the system was released to normal pressure and the polymerization reaction was terminated. The resulting aqueous dispersion was taken out and cooled, and the paraffin wax was separated, whereby an aqueous PTFE dispersion was obtained. The average primary particle size of the resulting aqueous PTFE dispersion was 310 nm, and the solid concentration was 25.3% by mass.

The resulting aqueous PTFE dispersion was diluted to a solid concentration of 13% by mass. The PTFE was coagulated with stirring in the container and filtered out from water to give wet PTFE powder.

The wet PTFE powder was dried at 180°C for 18 hours to give PTFE-1.

The SSG of the resulting PTFE-1 was 2.156.

### Manufacturing Example 2

A 6-L stainless-steel autoclave equipped with a stirring blade and a temperature-controlling jacket was charged with 3580 g of deionized water, 100 g of paraffin wax, and 5.4 g of white solid A. The inside of the autoclave was purged with nitrogen gas with warming to 80°C to remove oxygen. After addition of 1.20 g of CTFE, TFE was further injected to set the pressure inside the system to 0.78 MPaG and the temperature inside the system was maintained at 80°C under stirring. Next, an aqueous solution prepared by dissolving 360 mg of disuccinic peroxide in 20 g of water and an aqueous solution prepared by dissolving 10 mg of ammonium persulfate in 20 g of water were injected with TFE, whereby a polymerization reaction was started. The pressure inside the system dropped as the polymerization reaction progressed. TFE was thus added so that the temperature inside the system was maintained at 80°C and the pressure inside the system was maintained at 0.78 MPaG. When 1530 g of TFE had been consumed from the start of the polymerization (conversion rate: 90%), 4.2 g of CTFE was injected with TFE. The polymerization was further continued. When the amount of TFE polymerized reached approximately 1700 g from the start of the polymerization, stirring and feeding of TFE were stopped. Immediately thereafter, the gas inside the system was released to normal pressure and the polymerization reaction was terminated. The resulting aqueous dispersion was taken out and cooled, and the paraffin wax was separated, whereby an aqueous PTFE dispersion was obtained. The average primary particle size of the resulting aqueous PTFE dispersion was 241 nm, and the solid concentration was 32.0% by mass.

The resulting aqueous PTFE dispersion was diluted to a solid concentration of 13% by mass. The dilution was vigorously stirred in a container equipped with a stirrer for coagulation, and then filtered out from water to give wet PTFE powder.

The resulting wet PTFE powder was dried at 145°C for 18 hours to give PTFE-2.

The CTFE content of the resulting PTFE-2 was 0.23% by mass. The SSG of the PTFE-2 was 2.170.

Mixture sheets of examples and comparative examples were produced and evaluated by the following procedures. The component ratios were adjusted to the values shown in Table 1.

### (Production of electrode mixture sheet)

### (Example 1)

### Step 1

Positive electrode active material A and PTFE-1 were weighed and sufficiently warmed in a thermostatic chamber at 60°C. They were then charged into a high-speed stirring mixer and stirred for one minute at a blade rotation speed of 6850 rpm to apply a shear force, whereby a mixture with many fibrils was produced.

### Step 2

After cooling to 25°C, conductive aid AB as a carbon material was added to the obtained mixture and processed at 1500 rpm for one minute to disperse the carbon material into the mixture. Thus, an electrode mixture was obtained.

### Step 3

The electrode mixture was fed to a rolling machine with rolls rotatable at different peripheral speeds, and formed into an electrode mixture sheet (temperature: 60°C, left roll rotation speed: 1 m/min, right roll rotation speed: 0.8 m/min).

### Step 4

The resulting mixture sheet was again fed to the rolling machine and rolled in the same manner to give an electrode mixture sheet with higher sheet strength.

The electrode mixture sheet was then fed to a roll press machine to adjust the gap. The final thickness of the mixture sheet was adjusted to 80 µm.

### (Example 2)

A mixture sheet was obtained as in Example 1 except that the material composition was changed as shown in Table 1, and that the rotation speed and the processing time in Step 1 were 1900 rpm and three minutes, respectively.

### (Example 3)

A mixture sheet was obtained as in Example 1 except that the material composition was changed as shown in Table 1, and that the rotation speed and the processing time in Step 1 were 4300 rpm and three minutes, respectively.

### (Example 4)

A mixture sheet was obtained as in Example 1 except that the material composition was changed as shown in Table 1.

### (Example 5)

A mixture sheet was obtained as in Example 1 except that the material composition was changed as shown in Table 1, and that the rotation speed and the processing time in Step 1 were 3000 rpm and 10 minutes, respectively.

### (Example 6)

A mixture sheet was obtained as in Example 1 except that the material composition was changed as shown in Table 1, and that the rotation speed and the processing time in Step 1 were 3000 rpm and 20 minutes, respectively.

### (Example 7)

A mixture sheet was obtained as in Example 1 except that the material composition was changed as shown in Table 1, and that the processing time in Step 1 was three minutes.

### (Example 8)

A mixture sheet was obtained as in Example 1 except that the material composition was changed as shown in Table 1, and that the processing time in Step 1 was three minutes.

### (Example 9)

A mixture sheet was obtained as in Example 1 except that the material composition was changed as shown in Table 1, and the rotation speed and the processing time in Step 1 were 4300 rpm and three minutes, respectively.

### (Example 10)

A mixture sheet was obtained as in Example 1 except that the material composition was changed as shown in Table 1, and that the processing time in Step 1 was three minutes.

### (Example 11)

A mixture sheet was obtained as in Example 1 except that the material composition was changed as shown in Table 1, and that the rotation speed and the processing time in Step 1 were 1500 rpm and 10 minutes, respectively.

### (Example 12)

A mixture sheet was obtained as in Example 1 except that in Step 1, silicon oxide was used as an active material other than carbon, the amount of the PTFE-1 was 1% by mass, the amount of the PTFE-2 was 1% by mass, and the processing time was three minutes, and that in Step 2, graphite was used as a carbon material.

### (Example 13)

A mixture sheet was obtained as in Example 1 except that the material composition was changed as shown in Table 1, that the processing time in Step 1 was three minutes, and that the processing temperature in Step 3 was 140°C.

### (Comparative Example 1)

### Step 1

Positive electrode active material A, PTFE-1, and conductive aid AB as a carbon material were weighed and sufficiently warmed in a thermostatic chamber at 60°C. They were then charged into a high-speed stirring mixer and stirred for one minute at a blade rotation speed of 6850 rpm to apply a shear force, whereby a mixture with many fibrils was produced.

### Step 2

After cooling to 25°C, the obtained mixture was processed at 1500 rpm for one minute to give an electrode mixture.

Step 3 and Step 4 were performed as in Example 1, whereby a mixture sheet was prepared.

### (Determination of whether fibrils were produced)

The mixture after Step 1 was observed by SEM (7000x magnification) to determine whether fibrils were produced. In Examples 1 to 12, multiple fibrils produced from PTFE were observed.

### (Measurement of value X)

### <Measurement sample>

The electrode mixture sheet was cut to a size of 1 cm × 1 cm (with any desired thickness) to give a measurement sample.

### <Interface length (pix)>

(i) For each measurement sample, images of carbon composition distribution were captured at three points by scanning electron microscopy-energy dispersive X-ray spectrometry (SEM-EDX) analysis in a 2000x field of view at an accelerating voltage of 3000 V and an image size of 1280 × 960. The images were captured at a first point at a center of the measurement sample, and at second and third points shifted to the left and right by 2 mm from the center of the measurement sample. The images were captured with SU8000 available from Hitachi High-Tech Corporation.
(ii) The images obtained in (i) were binarized. The images, captured with N = 3 per sample, were each divided into intensity levels from 0 to 255, and the threshold of each image was determined by Otsu's method. Subsequently, the average of the binarization thresholds of the images was calculated to determine the average threshold of the sample. Using the average threshold, the images prior to binarization were binarized again.
(iii) In each image obtained in (ii), the number of elements with a non-zero element difference between pixels was counted and taken as the interface length of the image.

### <Amount of detected carbon (cps/eV)>

The spectrum data obtained at the same time as the image data of (i) above was used to calculate the amount of detected carbon in each image. The spectrum data was one obtained in the SEM-EDX measurement in which X-ray energy [keV] was on the horizontal axis and X-ray intensity [cps/eV] was on the vertical axis. From the spectrum data, a peak appearing around 0.27 keV, corresponding to the intrinsic energy of carbon, was identified, and the maximum value of the peak on the vertical axis was read. The read value was taken as the amount of detected carbon.

### <Interface length ÷ amount of detected carbon (value X)>

The interface length and the amount of detected carbon calculated in each image were used to calculate the value of interface length ÷ amount of detected carbon for three points per sample. The average (N = 3) was taken as the value (value X) of interface length ÷ amount of detected carbon of the sample.

The results are shown in Table 2.

### (Measurement of strength of electrode mixture sheet)

The electrode mixture sheet was cut to give a strip-shaped test piece with a width of 4 mm. A tensile tester (AGS-100NX, available from Shimadzu Corp.) was used to determine the strength of the test piece at 100 mm/min. The chuck distance was set to 40 mm. A displacement was applied to the test piece until breaking, and the maximum stress of the measured results was taken as the strength of each sample.

The results are shown in Table 2.

### (Measurement of resistance of electrode mixture sheet)

The electrode mixture sheet was cut to a 5-cm-square sample and subjected to measurement by a four-terminal/four-point probe method (Loresta GP (MCP-T610) available from Mitsubishi Chemical Analytech Co., Ltd.) to determine the surface resistivity (Ω/□) of the mixture layer. After the measurement, the surface resistivity (Ω/□) was multiplied by the thickness of the mixture layer to give the volume resistivity (Ω·cm) of the electrode mixture sheet. The thickness of the mixture layer was the average thickness of three points in the electrode mixture sheet measured using a micrometer.

The resistance was evaluated as follows based on the measured value of the volume resistivity.
A: less than 100 Ωcm
B: 100 Ωcm or more and less than 150 Ωcm
C: 150 Ωcm or more and less than 200 Ωcm
D: 200 Ωcm or more

The results are shown in Table 2.

**[Table 1]**

| | Active material other than carbon material | Carbon material | PTFE type (the ratio is by mass) | Component ratio (mass ratio) (active material:carbon material:PTFE) |
|---|---|---|---|---|
| Comparative Example 1 | Positive electrode active material A | AB | PTFE-1 | 96:3:1 |
| Example 1 | Positive electrode active material A | AB | PTFE-1 | 96:3:1 |
| Example 2 | Positive electrode active material A | AB | PTFE-1 | 95:3:2 |
| Example 3 | Positive electrode active material A | AB | PTFE-1 | 95:3:2 |
| Example 4 | Positive electrode active material A | AB | PTFE-1 | 95:3:2 |
| Example 5 | Positive electrode active material A | AB | PTFE-1 | 92:3:5 |
| Example 6 | Positive electrode active material A | AB | PTFE-1 | 92:3:5 |
| Example 7 | Positive electrode active material A | SuperP Li | PTFE-1 | 95:3:2 |
| Example 8 | Positive electrode active material A | AB | PTFE-1:PTFE-2 = 1:1 | 95:3:2 |
| Example 9 | Positive electrode active material B | AB | PTFE-2 | 95:3:2 |
| Example 10 | Positive electrode active material B | AB | PTFE-2 | 95:3:2 |
| Example 11 | Positive electrode active material B | AB | PTFE-2 | 92:3:5 |
| Example 12 | SiO | Graphite | PTFE-1:PTFE-2 = 1:1 | 8:90:2 |
| Example 13 | Positive electrode active material B | SuperP Li | PTFE-1:PVdF-1 = 1:1 | 92:3:5 |

**[Table 2]**

| | Carbon material addition | Mixing conditions in step (1) | | Mixing conditions in step (2) | | Value X | Tensile strength | Resistance |
|---|---|---|---|---|---|---|---|---|
| | | rpm | min | rpm | min | | [N/mm²] | [Ω·cm] |
| Comparative Example 1 | Simultaneous with other components | 6850 | 1 | 1500 | 1 | 2463 | 0.08 | D |
| Example 1 | After other components | 6850 | 1 | 1500 | 1 | 2163 | 0.11 | B |
| Example 2 | After other components | 1900 | 3 | 1500 | 1 | 574 | 0.22 | A |
| Example 3 | After other components | 4300 | 3 | 1500 | 1 | 975 | 0.27 | B |
| Example 4 | After other components | 6850 | 1 | 1500 | 1 | 1191 | 0.39 | C |
| Example 5 | After other components | 3000 | 10 | 1500 | 1 | 954 | 0.74 | B |
| Example 6 | After other components | 3000 | 20 | 1500 | 1 | 777 | 0.38 | C |
| Example 7 | After other components | 6850 | 3 | 1500 | 1 | 649 | 0.25 | C |
| Example 8 | After other components | 6850 | 3 | 1500 | 1 | 430 | 0.20 | B |
| Example 9 | After other components | 4300 | 3 | 1500 | 1 | 975 | 0.27 | B |
| Example 10 | After other components | 6850 | 3 | 1500 | 1 | 1289 | 0.47 | C |
| Example 11 | After other components | 1500 | 10 | 1500 | 1 | 496 | 0.25 | B |
| Example 12 | After other components | 6850 | 3 | 1500 | 1 | 445 | 0.15 | B |
| Example 13 | After other components | 6850 | 3 | 1500 | 1 | 1085 | 0.39 | B |

The abbreviations in the tables are as follows. Positive electrode active material A: Li(Ni_{0.6}Mn_{0.2}Co_{0.2})O₂ Positive electrode active material B: Li(Ni_{0.8}Mn_{0.1}Co_{0.1})O₂ AB: Acetylene Black Li-100, available from Denka Company Ltd.
SuperP Li: carbon black available from Imerys S.A.
PVdF-1: modified PVdF having an acrylic acid functional group (D50 = 2.0 µm)

## Claims

1. An electrode mixture sheet comprising:
a polytetrafluoroethylene;
a carbon material; and
an electrode active material other than the carbon material and/or a fluororesin other than the polytetrafluoroethylene,
the electrode mixture sheet having a value X of 2300 or less, where the value X is expressed as interface length/amount of detected carbon in an image of carbon composition distribution in a 2000x field of view obtained by SEM-EDX analysis.

2. The electrode mixture sheet according to claim 1,
wherein the value X is 300 or more and 2000 or less.

3. The electrode mixture sheet according to claim 1 or 2,
wherein a total amount of the polytetrafluoroethylene and the fluororesin other than the polytetrafluoroethylene is 0.1% by mass or more and 10% by mass or less relative to the electrode mixture sheet.

4. The electrode mixture sheet according to any one of claims 1 to 3,
wherein the carbon material is a conductive aid.

5. The electrode mixture sheet according to any one of claims 1 to 4,
wherein the electrode active material other than the carbon material is a positive electrode active material.

6. The electrode mixture sheet according to claim 5,
wherein an amount of the positive electrode active material is 92% or more and 99% by mass or less relative to the electrode mixture sheet.

7. An electrode comprising the electrode mixture sheet according to any one of claims 1 to 6.

8. A secondary battery comprising the electrode according to claim 7.

9. A method of producing an electrode mixture sheet, comprising:
(1) mixing a polytetrafluoroethylene with an electrode active material other than a carbon material and/or a fluororesin other than the polytetrafluoroethylene; and
(2) mixing the mixture obtained in the step (1) with a carbon material.

10. The production method according to claim 9,
wherein the step (1) includes producing fibrils of the polytetrafluoroethylene by a shear force.

11. The production method according to claim 9 or 10,
wherein the mixing in the step (2) is performed with a lower shear force than in the step (1).

12. The production method according to any one of claims 9 to 11,
wherein all the components mixed in the step (1) are powder, and the step (1) is performed in the absence of a liquid medium.

13. The production method according to any one of claims 9 to 12,
wherein a processing temperature in the step (2) is lower than a processing temperature in the step (1).

14. The production method according to any one of claims 9 to 13,
wherein the step (1) and the step (2) are performed using an identical device.
